Europäisches Patentamt

European Patent Office

Office européen des brevets

(19)

(11) **EP 0 869 332 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(51) Int Cl.[7]: **G01D 3/032**, G01D 18/00, G01R 19/10

(21) Anmeldenummer: **98106054.4**

(22) Anmeldetag: **02.04.1998**

(54) **Vorrichtung und Verfahren zum Auswerten eines Sensor-Spannungssignals**

Method and device to process a voltage signal of a sensor

Procédé et dispositif pour l'interprétation d'un signal de tension d'un capteur

(84) Benannte Vertragsstaaten:
**AT BE CH DE ES FI FR GB IT LI LU NL SE**

(30) Priorität: **02.04.1997 DE 19713552**

(43) Veröffentlichungstag der Anmeldung:
**07.10.1998 Patentblatt 1998/41**

(73) Patentinhaber: **Steinel GmbH & Co. KG**
**33442 Herzebrock-Clarholz (DE)**

(72) Erfinder: **Tetling, Helmut, Dipl.-Ing.**
**44143 Dortmund (DE)**

(74) Vertreter: **Behrmann, Niels, Dipl.-Ing. et al**
**Hiebsch Behrmann,**
**Patentanwälte**
**Postfach 464**
**78204 Singen (DE)**

(56) Entgegenhaltungen:
**GB-A- 2 169 720**

• **PATENT ABSTRACTS OF JAPAN vol. 096, no. 005, 31. Mai 1996 & JP 08 005397 A (SONY CORP), 12. Januar 1996**

## Beschreibung

Die vorliegende Erfindung betrifft eine Vorrichtung zum Auswerten eines Sensor-Spannungssignals, welches eine gegenüber einer Gleichspannungskomponente kleine auszuwertende Nutzsignalamplitude aufweist, mit den Merkmalen des Oberbegriffes des Patentanspruches 1 bzw. 11. Ferner betrifft die Erfindung ein Verfahren zum Auswerten bzw. Wandeln eines solchen Spannungssignals und zum Erzeugen eines digital auswertbaren Steuersignals als Reaktion auf das Nutzsignal. Derartige Vorrichtungen finden beispielsweise als elektronische Schaltungen zum Auswerten bzw. Wandeln eines pyro-elektrischen Bewegungsdetektorsignals Anwendung.

Aus dem Stand der Technik ist es bekannt, ein Spannungsausgangssignal eines auf Infrarotbasis arbeitenden, handelsüblichen Bewegungsdetektors elektronisch auszuwerten, um -- etwa zur Beleuchtungssteuerung oder für Alarmzwecke -- als Reaktion auf eine erfaßte Bewegung einer Person ein entsprechendes Schalt- oder Steuersignal auszugeben.

Allerdings ist das Detektorsignal, wie es etwa von handelsüblichen Pyro-Detektoren zur Infrarot-Bewegungserfassung erzeugt wird, für eine derartige Auswertung nicht unproblematisch. Insbesondere erzeugt nämlich ein solcher Detektor ein nur wenige μVolt bis mVolt hohes Nutzsignal als Reaktion auf eine erfaßte Bewegung, welches einer Gleichspannungskomponente des Detektorsignals überlagert ist, die sogar einige Volt betragen kann.

Herkömmlicherweise wurde daher das (Wechselstrom-) Nutzsignal mit dem jeweils notwendigen Filteraufwand ausgekoppelt und danach für eine Weiterverarbeitung bzw. Signalauswertung (mehrstufig) verstärkt.

Durch diese Maßnahmen wird jedoch nicht nur -- teils beträchtlicher -- Schaltungsaufwand notwendig, der entsprechend die Fertigungskosten einer solchen Vorrichtung nachteilig beeinflußt.

Da schließlich, fertigungsbedingt, handelsübliche Detektorelemente in ihren Parametern und entsprechend in ihren elektrischen Ausgangssignalen stark streuen, sind oftmals beträchtliche Auswahl-, Einstell- bzw. Kalibrierungsarbeiten notwendig, um eine zugehörige Auswertschaltung optimal an ein jeweiliges Detektorelement anzupassen. So kann etwa je nach Hersteller und Charge ein -- nicht für die Auswertung nutzbarer -- Sensor-Gleichspannungspegel zwischen 0,5 und 2,5 Volt liegen.

Aufgabe der vorliegenden Erfindung ist es daher, eine gattungsgemäße Vorrichtung zum Auswerten eines Spannungssignals zu schaffen, welche mit geringem schaltungstechnischem Aufwand eine zuverlässige und reaktionsschnelle Erfassung bzw. Wandlung eines gegenüber einer überlagerten Gleichspannungskomponente kleinen AC-Nutzsignals ermöglicht.

Die Aufgabe wird durch die Vorrichtung nach den Patentansprüchen 1 und 11 sowie das Verfahren nach dem Patentanspruch 12 gelöst.

Vorteilhaft wird mit Hilfe des Ladungsspeichers und dessen großer Zeitkonstante aus einem einfach zu generierenden -- relativ großen -- Spannungshub ein für die konkrete Auswertung mittels Komparator nützliches kleines Spannungsdifferenz-Signal im Bereich von einigen Mikrovolt bis etwa hin zu einem Millivolt erzeugt, ohne daß es hierfür einer aufwendigen Schaltungstechnik oder gar besonderer Toleranzanforderungen an die einzusetzenden Bauelemente bedarf.

Vielmehr wird durch die Verhältnisse zwischen den beteiligten Zeitkonstanten -- einerseits eine hohe Zeitkonstante des RC-Gliedes, andererseits eine kurze Zeitkonstante der Spannungsumschaltung, während derer nur eine bruchteilhafte Aufladung möglich ist -- erreicht, daß in einfacher und reproduzierbarer Art ein transformiertes Meßspannungssignal entsteht.

Erfindungsgemäß ist als "klein" im Sinne des Patentanspruches 1 für das Verhältnis der Nutzsignalamplitude zur überlagerten Gleichspannungsamplitude ein Verhältnis zu verstehen, welches einige Mikrovolt bis hin zu einem Millivolt in Bezug zu etwa 0,5 bis 4 Volt setzt.

Auch ist als "kurz" im Sinne der erfindungsgemäßen Wiederhohlfrequenz (genauer gesagt dessen Periodendauer) ein Verhältnis zur ersten Zeitkonstante von mindestens 1:30 zu verstehen.

Die Erfindung basiert auf dem Prinzip, eine üblicherweise reaktionsschnelle Komparator-Schaltschwelle für die Auswertung des Sensor-Nutzsignals dergestalt zu benutzen, daß diese Schaltschwelle in den Bereich der (gegenüber dem Nutzsignal großen) Gleichspannungskomponente des Sensor-Ausgangssignals gelegt wird, und durch Erzeugen eines periodischen Rampensignals im Bereich dieses Arbeitspunktes digitale Schaltschwellensignale erzeugt werden, wobei dann dem Sensor-Gleichspannungspegel überlagerte Nutzsignalkomponenten die erfaßten Schaltschwellensignale, und insbesondere deren Kippfrequenz bzw. Tastverhältnis, beeinflussen. So führt etwa ein höherer Nutzsignalpegel erst zu einem späteren Kippen des Komparator-/Schaltschwellensignals.

Während es zum einen im Rahmen der Erfindung möglich ist, dieses Prinzip durch einen (diskreten oder integrierten) Komparator zu realisieren, der einerseits mit dem Sensor-Spannungssignal und andererseits mit dem (auf den Gleichspannungspegel des Sensors angehobenen) periodisch betriebenen Rampensignal beschaltet ist, so ist es im Rahmen der Erfindung auch möglich, den Komparator durch die digitale Schaltschwelle eines Controller- bzw. Prozessoreingangs zu realisieren, deren Schwellspannung insoweit als Referenzspannung gilt, und die dann mit einem Sensorsignal beaufschlagt wird, dessen Gleichspannungspegel in den Bereich dieser Schaltschwelle angehoben wurde. Bedingung hierfür ist lediglich, daß die Schwellenspannung höher ist als die Sensorspannung.

Diesbezüglich hat es sich als besonders vorteilhaft herausgestellt, die Gleichspannungs-Arbeitspunkteinstellung am (hochohmigen) Steuerkontakt der Sensorelektronik selbst vorzunehmen, wobei hier dann das Sensor-Arbeitspunktsignal mit seiner Rampenform anliegt.

Vorteilhafte Weiterbildungen der Erfindung sind in den Unteransprüchen beschrieben.

So hat es sich als besonders vorteilhaft herausgestellt, wesentliche Funktionskomponenten der erfindungsgemäßen Vorrichtung, insbesondere den Komparator, die nachgeschalteten Auswerteinheiten und/oder den steuerbaren, stufenweisen Spannungsgenerator als Bestandteile eines (weiter bevorzugt desselben) Mikrocontrollers od. dgl. integrierten Bausteins zu realisieren.

Durch die teilweise bereits sehr günstigen Herstellungsund Beschaffungskosten solcher programmierbarer Bausteine läßt sich somit die Erfindung mit äußerst geringem Aufwand und mit nur wenigen, externen Schaltungskomponenten umsetzen.

Das erfindungsgemäße Verfahren ermöglicht weiterbildungsgemäß die zuverlässige, periodische -- d.h. zu wiederkehrenden Zeitpunkten während eines Dauerbetriebs -- erfolgende Kalibrierung auf einen aktuellen Gleichspannungs-Signalpegel des Sensors, so daß die Vorrichtung stets auf ihrem optimalen Arbeitspunkt verbleibt. Die im Sinne des weiterbildungsgemäßen Kalibrierungsschritts anzulegende Spannung ist dabei als Gleichspannungspegel zu verstehen, der gleich, größer oder niedriger als die Gleichspannungskomponente ist.

Während sich für Auswertungsmaßnahmen am Komparator-Ausgangssignal insbesondere die digitale, prozessorgesteuerte Auswertung eignet, liegt es im Rahmen der Erfindung, auch andere, geeignete Auswertmöglichkeiten vorzusehen.

Auch ist das Anwendungsgebiet der vorliegenden Erfindung keinesfalls auf den Einsatz mit IR-Detektoren zur Bewegungserfassung beschränkt.

Vielmehr scheint die Erfindung für jegliche Art der A/D-Wandlung geeignet, die -- wie im vorliegenden Fall -- die reaktionsschnelle Weiterbearbeitung einer gegenüber einem überlagernden Pegel sehr kleinen Signalamplitude erfordert. Auch wenn, je nach Vorgabe der Parameter und Zeiten, eine Meßgenauigkeit bzw. -auflösung für den Einzelfall möglicherweise begrenzt sein kann, so stellt die vorliegende Erfindung doch gerade bei Auswertproblemen, bei denen es auf das reaktionsschnelle Erfassen von kleinhubigen Signaländerungen ankommt, eine leistungsfähige und dennoch einfache Technik dar.

Weitere Vorteile, Merkmale und Einzelheiten der Erfindung ergeben sich aus der nachfolgenden Beschreibung von Ausführungsbeispielen sowie anhand der Zeichnungen; diese zeigen in

Fig. 1:  ein schematisches Blockschaltbild der erfindungsgemäßen Vorrichtung zum Auswerten eines Spannungssignals mit den Funktionskomponenten eines zur Realisierung der Erfindung verwendeten Mikrocontrollers;

Fig. 2:  ein konkretes Schaltbild der erfindungsgemäßen Wandler- bzw. Auswertschaltung gemäß einer ersten Ausführungsform und

Fig. 3:  ein Schaltbild der erfindungsgemäßen Wandler- und Auswertschaltung gemäß einer zweiten Ausführungsform, die insbesondere zum Auswerten einer Mehrzahl von Sensor-Spannungssignale geeignet ist und gegenüber der ersten Ausführungsform schaltungstechnisch weiter vereinfacht ist.

Das Ausgangssignal $U_S$ eines Infrarotdetektors 10 -- beispielsweise eines pyro-elektrischen Detektormoduls mit einer zum Erreichen einer Gleichtaktunterdrückung gegenpolig verschalteten Mehrzahl von Detektorelementen, wie etwa von der Firma Heimann produziert und in den Verkehr gebracht -- weist eine produktions- und betriebszustandsbedingte Gleichspannungskomponente $U_{SDC}$ im Bereich zwischen etwa 0,5 und 2,5 Volt auf sowie eine diesem überlagerte Nutzsignalkomponente $U_{SAC}$, die jedoch nur einen Signalhub von üblicherweise einigen Mikrovolt, bis maximal zu einigen Millivolt, besitzt. Diese Nutzsignalkomponente $U_{SAC}$ entsteht als Reaktion auf eine Bewegungserfassung durch die Sensoreinheit 10 und ist zum Erreichen eines Bewegungssteuersignals auszuwerten; demgegenüber ist die Gleichspannungskomponente $U_{SDC}$ für Auswertungszwecke ungeeignet und stellt vielmehr durch ihren gegenüber der Nutzsignalkomponente $U_{SAC}$ sehr hohen Absolutpegel und im Betrieb -- etwa wärmebedingt -- entstehende Schwankungen dieses Gleichspannungspegels eine nicht unerhebliche Schwierigkeit bei der Auswertung der kleinen Nutzsignalamplitude dar.

Erfindungsgemäß wird das Sensorsignal $U_S$ auf einen ersten (nicht-invertierenden) Eingang eines Komparators 12 geschaltet, der das Sensorsignal $U_S$ mit einer über einem Referenzwiderstand 14 gebildeten Referenzspannung $U_R$ vergleicht und ein Komparator-Ausgangssignal erzeugt, welches -- kurzzeitig und mit hoher Auflösung bzw. Genauigkeit -die Verhältnisse $U_S$ vs. $U_R$ widerspiegelt und einer nachfolgenden Auswerteinheit 16 zur Auswertung und letztendlich zur Ausgabe eines Bewegungs-Detektorsignals über eine Signal-Ausgangsleitung 18 zugeleitet wird.

Die Erzeugung der Referenzspannung $U_R$ erfolgt mittels einer -- bevorzugt controller- bzw. prozessorgesteuerten -- Spannungsgeneratoreinheit 20, die, etwa durch geeignete, digitale Ansteuerung, abgestufte Spannungssignale $U_G$ innerhalb eines Gesamthubes von beispielsweise 3 bis 4 Volt erzeugt, so daß bei einer 4-Bit-Auflösung mit 16 Spannungsstufen etwa 200 mV - Stufen generiert werden. Eine solche -- interne -- Spannungserzeugung ist Bestandteil gängiger, preisgünstiger Mikrocontroller und bietet sich daher zur Benutzung auch für den vorliegenden Fall der Wandlung bzw. Auswertung eines Detektor-Ausgangssignals an. Da jedoch der auf diese Weise digital wählbare Spannungshub noch um mehrere Zehnerpotenzen größer ist als die Amplitude des eigentlich auszuwertenden Nutzsignals $U_{ADC}$, ist noch eine Umsetzung der generierten Spannung bzw. der Spannungsstufen in den Mikrovolt bzw. Millivoltbereich notwendig. Dies erfolgt durch das nachfolgend zu beschreibende Netzwerk.

Insbesondere wird nämlich durch das stufenweise einstellbare Ausgangssignal $U_G$ der Spannungsgeneratoreinheit 20 ein Ladekondensator 22 über einen Ladewiderstand 24 aufgeladen, wobei das so gebildete RC-Glied eine lange Zeitkonstante $\tau$ etwa im Bereich zwischen 2 und 50 Sekunden aufweist. Über eine Entkopplungseinheit -- etwa ein hochohmiger Verstärker mit großem Verstärkungsfaktor -- wird dann die Ladespannung des Kondensators 22 an den Referenzwiderstand 14 angelegt, so daß über diesem die Referenzspannung $U_R$ abfällt.

Wird nun eine Auswertung des Sensorsignals $U_S$ mit Hilfe der Referenzspannung $U_R$ innerhalb eines Zeitbereichs vorgenommen, der klein gegenüber der Zeitkonstante $\tau$ des RC-Gliedes 22/24 ist, führt eine Spannungsänderung am Ausgang der Spannungsgeneratoreinheit 22 -- etwa um den Betrag einer digital einstellbaren Stufe von z. B. 200 mV -- innerhalb einer Erfassungszeit $t_e$ << $\tau$ nur zu einer Spannungsänderung über dem Referenzwiderstand 14 im Betrag von einigen $\mu V$ bis mV, je nach Bemessung der Erfassungszeit $t_e$.

Erfindungsgemäß wird diese Spannungstransformation dann ausgenutzt, um in Verbindung mit dem hochempfindlichen und reaktionsschnellen Vergleicher 12 dann eine Bewertung des Sensor-Ausgangssignals $U_S$ vorzunehmen.

Damit dieses Prinzip der Signalwandlung wie beabsichtigt arbeiten kann, ist es vorab -- d.h. nach dem Einschalten bzw. Aktivieren der Schaltungsvorrichtung bei entladenem Ladekondensator 22 -- notwendig, $U_R$ auf den vorgesehenen Arbeitspunkt einzustellen, d.h. $U_R$ auf den Gleichspannungspegel $U_{SDC}$ zu kalibrieren. Dies wird -- durch Wirkung etwa der Steuereinheit 28 -- nach dem Einschalten bewirkt, indem der Spannungsgenerator 20 ein hochpegliges Signal (etwa 5 Volt) ausgibt, welches -- entsprechend der Zeitkonstante des RC-Gliedes 22/24 -- den Ladekondensator 22 soweit auflädt, bis der Spannungsabfall über dem Widerstand 14, also $U_R$, gleich dem Sensorgleichspannungspegel $U_{SDC}$ ist.

Damit ist dann der erfindungsgemäße Wandler betriebsbereit, wobei das Erreichen des vom Sensor vorgegebenen Pegels $U_{SDC}$ durch das Kippen des Komparators 12 erfaßt werden kann.

Da zudem ein etwaiger Spannungsabfall $U_A$ über der Entkopplungseinheit 26 -- vorgabebedingt -- bekannt ist, läßt sich nunmehr für den Wandlerbetrieb die Ausgangsspannung der Spannungsgeneratoreinheit 20 gezielt wie folgt vorwählen:

$$\text{Generatorspannung } U_G = U_A + U_{SDC} \; +/- \; k \cdot \text{Stufenspannung} \qquad (1)$$

wobei k = 1,2,3...

beträgt.

Erfindungsgemäß wird innerhalb eines definierten Zeitfensters -- z.B. 100 ms -- die Generatorspannung $U_G$ zwischen einem Maximalwert $U_A + U_{SDC} + k \cdot$ Stufenspannung und einem Minimalwert von $U_A + U_{SDC} - k \cdot$ Stufenspannung (wobei die Stufenspannung z.B. $U_G/16$, also im vorliegenden Beispiel etwas mehr als 200 mV betragen kann) umgeschaltet, wobei das Zeitfenster $t_e$ sehr viel kleiner als die aus dem Ladewiderstand 24 und dem Ladekondensator 22 resultierende Zeitkonstante $\tau$ ist.

Im Ergebnis führt dann die kontinuierliche Umschaltung innerhalb einer Wiederholfrequenz $1/t_e$ zu einem -- innerhalb dieser kurzen Zeit als linear zu approximierenden -- Spannungsanstieg bzw. Spannungsabfall am Referenzwiderstand 14 nur noch im Bereich von einigen Mikrovolt.

Wird dann durch mehrfaches, periodisches Abfragen (sampling) des Komparator-Ausgangssignals während jeder Periode $t_e$ (z.B. mit einer Sample-Frequenz von 25 KHz, entsprechend 2.500 Abtastvorgängen innerhalb einer Periode $t_e$) festgestellt, zu welchem Zeitpunkt bzw. ab welchem Sample-Wert der Komparator umschaltet, also die aktuelle Spannungsschwelle $U_s = U_{SDC} + U_{SAC}$ erreicht wird, ist hierdurch ein verhältnismäßig genauer und schneller Rückschluß auf die Nutzsignalkomponente $U_{SAC}$ möglich. Diese Aufgabe wird von der erfindungsgemäßen Auswerteinheit 16, die das Ausgangssignal des Komparators 12 empfängt, vorgenommen, wobei zu diesem Zweck das Taktsignal CL eines -- bevorzugt internen -- Taktgenerators 30 ausgenutzt wird.

Die verschiedenen, vorstehend beschriebenen Betriebsmodi --Kalibrieren der Referenzspannung $U_R$ auf einen (aktuellen) Gleichspannungsausgangspegel $U_{SDC}$ des Sensors, Meß- und Wandlerbetrieb nach dem Kalibrieren, wird in geeigneter Weise von der Steuereinheit 28 kontrolliert. Dazu gehört auch das ständige Nachführen der Kalibrierung auf den Sensor-Gleichspannungspegel $U_{SDC}$, da dieser sich etwa durch Temperaturänderungen auch während des Betriebs noch ändern kann. Darüber hinaus ist es dann möglich, in Abhängigkeit von einer gewünschten Empfindlichkeit der erfindungsgemäßen Erfassungs- und Wandlerschaltung geeignete Schaltschwellen vorzubestimmen und diese ggf. reichweiten- oder jahreszeitabhängig (Sommer vs. Winter) vorzugeben und nachzuführen.

Während die wesentlichen, vorbeschriebenen Schaltungseinheiten zur Spannungserzeugung, zum Vergleichen und zum Auswerten, einschließlich der Takterzeugung, Bestandteil eines handelsüblichen Mikrocontrollerbausteins, symbolisiert durch die gestrichelte Linie 32, sein können (best mode), ist es alternativ möglich, die Schaltung auch mit diskret aufgebauten Funktionseinheiten, oder aber mit Mikroprozessoren anderer Bauart zu realisieren.

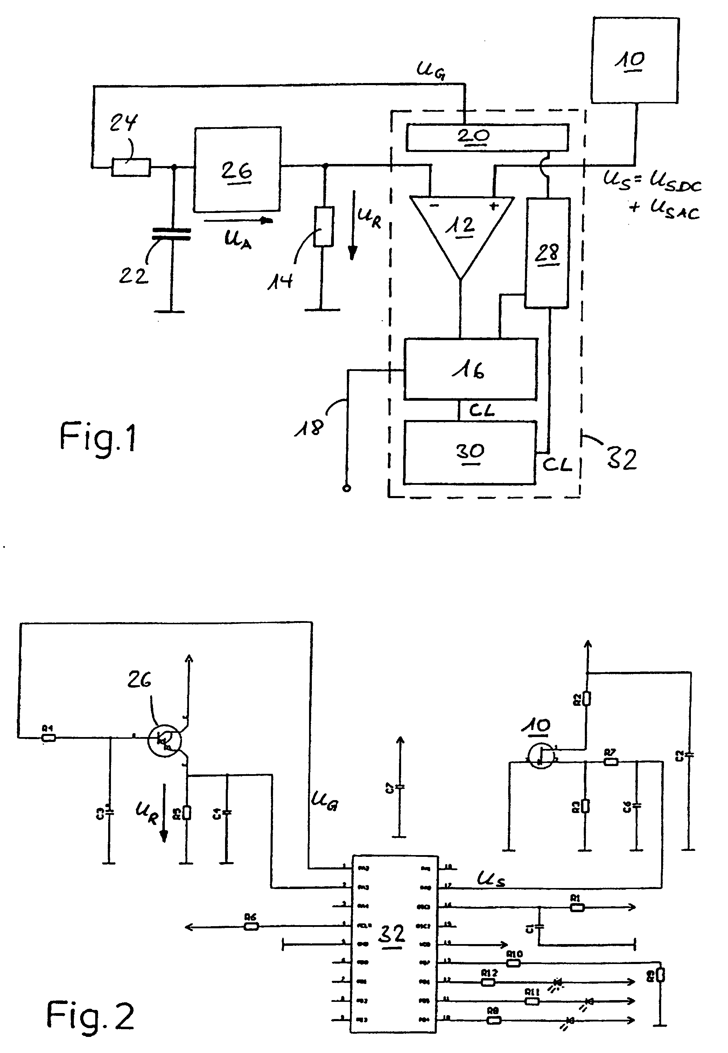

Unter Bezug auf die Fig. 2 wird nachfolgend eine konkrete Ausführungsform beschrieben, die in erfindungsgemäß vorteilhafter Weise die Eigenschaften eines handelsüblichen Mikrocontrollers ausnutzt und zum Erreichen der erfindungsgemäßen Wirkungen nur eine einfache, externe Beschaltung benötigt.

Als Mikrocontroller wird der Typ PIC16C62X der Firma Arizona Microchip eingesetzt, der über zwei unabhängige, interne Komparatoren verfügt (von denen jedoch zur Realisierung der Erfindung nur einer benötigt wird) und eine nach außen auf einen Prozessorpin schaltbare Komparatorreferenzspannung mit einer Auflösung von 16 Stufen intern erzeugen kann. Dieses Spannungsgeneratorsignal $U_G$ wird über einen ersten Pin ausgekoppelt und an das aus einem Widerstand R4 und einem Kondensator C3 gebildete RC-Netzwerk angelegt. Bei einer Bemaßung von 10 MOhm/ 4,7μF besitzt dann dieses RC-Glied eine theoretische Zeitkonstante τ von 47 sec. Die Ladespannung des Kondensators C3 liegt an der Basis eines Darlington-Transistors an, der im vorliegenden Fall aufgrund seiner hohen Verstärkung (> 1.000) und seines hohen Eingangswiderstandes als Entkopplungseinheit 26 eingesetzt wird. Die Referenzspannung $U_R$ fällt dann über dem Emitterwiderstand R5 des Transistors ab und liegt an dem (invertierenden) Eingang PA3 eines im Controller 32 enthaltenen Komparators an. Entsprechend wird das Ausgangssignal des Sensors 10 an den nichtinvertierenden Eingang PA0 dieses Komparators angelegt. (Dessen Beschaltung erfolgt ansonsten in der üblichen Weise, wobei C6 und R7 der Störunterdrückung dienen).

Die weitergehende Signalverarbeitung geschieht dann in der im Zusammenhang mit Fig. 1 beschriebenen Weise Controller-intern, d.h. durch gesteuerte Kalibrierung der Referenzspannung $U_R$ über R5 bis zum Erreichen einer jeweiligen Sensorgleichspannung $U_{SDC}$, und nachfolgendes, gesteuertes und periodisch stufenweises Umschalten der Generator-Ausgangsspannung $U_G$ mit einer Folgezeit $t_e$ von beispielsweise 100 ms. Diese Generator-Ausgangsspannung $U_G$ wird dann gemäß (1) zu $U_{BE} + U_{SDC}$ +/- k • Stufenspannung eingestellt, wobei $U_{BE}$ die über Basis und Emitter des Darlington-Transistors 26 abfallende Spannung ist. Je nach gewünschter Auflösung wird dann der Multiplikationsfaktor k höher oder niedriger gewählt.

Ebenfalls Controller-intern wird dann der interne Komparatorausgang mit einer gegenüber $t_e$ hohen Frequenz (z.B. 25 KHz) abgetastet und die Impulszahl bis zum Kippen des Komparators ($U_R$ übersteigt bzw. unterschreitet $U_{SDC}$ + $U_{SAC}$) gezählt und ausgewertet.

Insbesondere ist auf diesem Wege auch eine Möglichkeit geschaffen, etwa bewegungstypische, charakteristische/digitale Muster der so abgefragten Komparator-Ausgangssignale zu erhalten und im Hinblick auf ihre Bewegungsinformation auszuwerten, so daß etwa Störungen oder unübliche Erfassungssignale erkannt und unterdrückt werden können.

Die weitere Beschaltung des Mikrocontrollers 32 ist rein exemplarisch und im Sinne eines Testaufbaues zu verstehen. Für die konkrete Realisierung stehen dann geeignete (Schalt-) Signalausgänge bzw. Steuereingänge, abhängig von einer jeweiligen Programmierung, bereit.

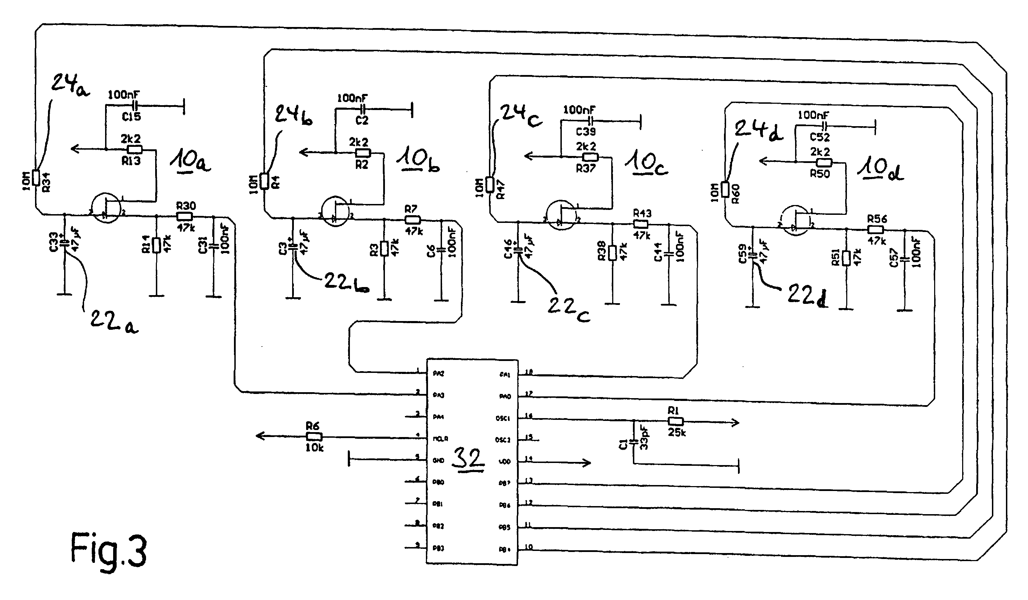

Die Fig. 3 zeigt eine weitere Ausführungsform der vorliegenden Erfindung, die gegenüber dem Schaltbild der Fig. 2 weiter vereinfacht ist und sich aus diesem Grunde insbesondere auch für eine Auswertung einer Mehrzahl von Sensoren bzw. Sensorsignalen mit einem Controllerchip 32 eignet.

Die in der Fig. 3 gezeigte Beschaltung mit vier IR-Pyrosensoren entspricht der Konfiguration gemäß Fig. 1 bzw. Fig. 2; lediglich wird hier das Gate des Sensor-FET unmittelbar mit dem Rampensignal, erzeugt von einem RC-Glied $22_i$, $24_I$ (i= a ... d für jeden Kanal) beschaltet. Dieses jeweilige RC-Glied empfängt ein digitales, vom Controller 32 geschaltetes Rechtecksignal mit Logikschwellen von beispielsweise 0 und 5 Volt.

Durch diese Beschaltung der jeweiligen Sensorelektronik wird die Gleichspannungs-Offset-Spannung am Sensorausgang, die bei Betrieb des Sensors mit einer Betriebsspannung von beispielsweise 2,5 bis 3 Volt im Bereich zwischen etwa 1 und 2 Volt liegt, auf einen Pegel angehoben, der im Bereich des Schaltschwellwertes eines Digitaleingangs des Controllers 32 liegt; durch den sehr hohen Eingangswiderstand am Gate des Sensor-FET ist das Aufprägen des zusätzlichen Signals problemlos möglich.

Erfindungsgemäß mißt nunmehr der Controller 32 die (angehobene, also im Gleichspannungs-Arbeitspunkt verschobene) Sensorspannung gegen den Low-High-Schwellwert des Digitaleingangs, wobei einzige Bedingung ist, daß dieser Schalt-Schwellwert höher liegt als der Sensor-Gleichspannungspegel. Aus diesem Grund bietet es sich bedarfsweise an, wie erwähnt, die Betriebsspannung des Sensors -- relativ zur Betriebsspannung des Controllerbausteins, die bei einem CMOS-Baustein üblicherweise bei 5 Volt liegt -- abzusenken.

Es wird dann das rampenförmige Meßsignal dem eigentlichen Sensorsignal direkt am Gate des Sensors aufgeprägt, wobei, wie bereits anhand des ersten Ausführungsbeispiels ausführlich erläutert, der Schalt- bzw. Kippzeitpunkt des Controllereingangs entlang eines Rampensignals bzw. das Tastverhältnis des daraus entstehenden Digitalsignals ein Maß für die Veränderung des Sensorsignals, mithin also für das Nutzsignal, ist.

Im Betrieb erfolgt die Ansteuerung eines jeweiligen Sensors so, daß zuerst der Prozessor 32 über einen jeweiligen Digitalausgang mit High-Signal (z.B. 5 Volt) mittels des jeweiligen Ladekondensators $22_i$ den Gleichspannungssummenpegel des Sensors soweit anhebt, bis die Schaltschwelle am zugehörigen Digitaleingang des Prozessors überschritten wird; die Gleichspannungsdifferenz zwischen reiner Sensor-Gleichspannungskomponente und der Schaltschwelle wird dabei durch das RC-Glied hinzugefügt. Ist die Port-Schwellenspannung erreicht, deaktiviert der Controller das digitale Ausgangssignal, das rampenförmige Sensorsignal fällt langsam ab, bis die Schaltschwelle wiederum erreicht ist und der Prozessor erneut das digitale Ausgangssignal aktiviert. Im Ergebnis entsteht somit ein mittels der Schaltschwelle am Prozessoreingang getriggertes Rechtecksignal, welches äußerst reaktionsschnell und präzise im Hinblick auf die kleinen Spannungsschwankungen der Nutzsignalamplitude des Sensor-Spannungssignals auswertbar ist: Sollte nämlich ein höheres, zusätzliches Nutzsignal anliegen, so würde sich das Taktverhältnis des durch die Schaltschwelle getriggerten Rechtecksignals ändern -- der mittels der Schaltschwelle realisierte Komparator kippt bzw. schaltet zu einem anderen Zeitpunkt entlang der Rampe -- und ermöglicht somit die einfache Digitalisierung des niedrigpegeligen Nutzsignals.

In Vereinfachung der vorbeschriebenen Ausführungsform nach Fig. 2 benötigt man zum Laden und Entladen des Rampenkondensators $22_1$ keine mehrstufige, vom Prozessor schaltbare Referenzspannung mehr; das Rampensignal wird einfach über das digitale Controller-Ausgangssignal mit den Logikschwellen 0 Volt bzw. 5 Volt erzeugt. Damit in diesem Fall jedoch das Rampensignal hinreichend flach ist, wird die Zeitkonstante eines RC-Gliedes $22_i/24_i$ etwa um den Faktor 10 größer gewählt als bei der Ausführungsform gemäß Fig. 2.

In dieser Ausführungsform der Fig. 3 wird also das Komparatorprinzip gemäß Fig. 1 / Fig. 2 dadurch realisiert, daß als Komparator die digitale Schaltschwelle eines Controllereingangs benutzt wird, die im Falle eines Si-Chips üblicherweise im Bereich von etwa 50 % der Betriebsspannung, bei 5 Volt also 2,5 Volt, liegt; damit reicht es zur Realisierung des Erfindungsprinzips aus, einen beliebigen Controllerport mit einer solchen Spannung zu verwenden, ohne daß dessen Kippspannung notwendigerweise programmierbar sein muß. Vielmehr wird gemäß der Ausführungsform der Fig. 3 der Gleichspannungsarbeitspunkt des Sensorsignals auf diese Kippspannung des Controllereingangs angehoben, wobei die dafür notwendige, den Sensor aufgeprägte Spannung gleichzeitig den zur Auswertung und Wandlung benötigten Rampenverlauf mit hoher Zeitkonstante aufweist.

Damit ist dann ein eingesetzter Prozessorbaustein in der Lage, mit äußerst einfacher Beschaltung das Signal von einem oder mehreren Sensoren simultan auszuwerten, wobei, wie in Fig. 3 gezeigt, die Anzahl der Sensoren nur durch die Rechenleistung des verwendeten Prozessors und die Anzahl der digitalen Ein-/Ausgänge begrenzt ist.

Durch eine so aufgebaute Wandler- und Erfassungsschaltung werden zahlreiche Vorteile realisiert: Nicht nur ist es erfindungsgemäß möglich, mit äußerst geringem Hardware-Aufwand eine Signalauswertung eines -- gegenüber einem überlagerten Gleichspannungssignal -- äußerst geringen Nutzsignalhubes vorzunehmen, darüber hinaus entfällt jegliche konventionell erforderliche Vorverstärkung des Sensor-(Nutz-) Signals, und die schnelle und genaue Reaktion des Komparators bzw. der als Komparator wirkenden, Schaltschwelle des Controllerbausteins wird zum Erzielen kurzer Reaktionszeiten des erfindungsgemäßen Analog-Digitalwandlers ausgenutzt, wie sie insbesondere für einen Einsatz als Bewegungsmelder erforderlich ist.

Da zudem erfindungsgemäß eine automatische Kalibrierung bzw. Nachführung auf eine detektorabhängige Gleichspannung erfolgt, ist keinerlei zusätzlicher -- ggf. manueller --Kalibrierungsaufwand notwendig, und zeit- bzw. kostenaufwendige Selektionsmaßnahmen bei Entwurf, Fertigung und Inbetriebnahme einer erfindungsgemäßen Erfassungs- und Wandlerschaltung entfallen.

Während sich die vorliegende Erfindung durch den geringen Hardware-Aufwand bei kurzen Reaktionszeiten insbesondere für eine Auswertung von (z.B. pyro-elektrischen) IR-Detektorelementen zur Bewegungserfassung eignet, ist die Anwendbarkeit der vorliegenden Erfindung hierauf nicht beschränkt. Vielmehr wird sich die Erfindung generell bei der Erfassung bzw. Wandlung eines analogen Spannungssignals mit nur geringem Hub gegenüber einer überlagerten Spannungskomponente als nützlich erweisen, insbesondere, wenn die überlagerte Spannungskomponente selbst Schwankungen unterworfen ist.

**Patentansprüche**

1. Vorrichtung zum Auswerten eines Sensor-Spannungssignals ($U_S$), das eine einer Gleichspannungskomponente ($U_{SDC}$) überlagerte, relativ zu dieser kleine Nutzsignalamplitude ($U_{SAC}$) aufweist, mit

   einer zum Erfassen des Sensor-Spannungssignals und zum Erzeugen eines von der Nutzsignalamplitude ($U_{SAC}$) abhängigen, digitalen Steuersignals eingerichteten Wandlerelektronik, **gekennzeichnet durch**

einen zum Vergleichen des Sensor-Spannungssignals mit einem Referenzsignal ($U_R$) verschalteten Komparator (12),

einen Spannungsgenerator (20), der zum gesteuerten Ausgeben eines Spannungssignals ($U_G$) auf diskretem Pegel ausgebildet und mit einem eine erste Zeitkonstante ($\tau$) aufweisenden Ladungsspeicher (22, 24) zum Erzeugen des Referenzsignals ($U_R$) verbunden ist,

eine Steuereinheit (28), die zum Ansteuern des Spannungsgenerators (20) dergestalt ausgebildet ist, daß dieser mit einer gegenüber der ersten Zeitkonstante ($\tau$) kurzen Wiederholfrequenz ($t_e$) periodisch zwischen zwei Spannungsstufen umschaltet,

und einer zum getakteten Erfassen einer Mehrzahl von Komparator-Ausgangssignalen eingerichteten Auswerteinheit (16), die als Reaktion auf die erfaßten Ausgangssignale, insbesondere deren Tastverhältnis, das digitale Steuersignal erzeugt.

2. Vorrichtung nach Anspruch 1, **dadurch gekennzeichnet, daß** der Komparator (12), die Steuereinheit (28) und die Auswerteinheit (16) Bestandteile eines handelsüblichen Mikrocontrollers oder Mikroprozessors sind.

3. Vorrichtung nach Anspruch 1 oder 2, dadurch gekennzeichent, daß der Spannungsgenerator (20) Bestandteil eines handelsüblichen Mikrocontrollers oder Mikroprozessors ist und zum programmgesteuerten Ausgeben des mehrstufigen Spannungssignals ausgebildet ist.

4. Vorrichtung nach einem der Ansprüche 1 bis 3, **dadurch gekennzeichnet, daß** der Ladungsspeicher als aus einem Ladekondensator und einem Ladewiderstand aufgebautes RC-Glied realisiert ist.

5. Vorrichtung nach einem der Ansprüche 1 bis 4, **gekennzeichnet durch** eine Entkopplungseinheit (26) zwischen dem Ladungsspeicher und dem Komparator (12), die bevorzugt als Halbleiterelement mit hohem Eingangswiderstand ausgebildet ist.

6. Vorrichtung nach Anspruch 5, **dadurch gekennzeichnet, daß** die Entkopplungseinheit mit einem Darlington-Transistor realisiert ist.

7. Vorrichtung nach einem der Ansprüche 1 bis 6, **dadurch gekennzeichnet, daß** die erste Zeitkonstante ($\tau$) zwischen etwa 5 und etwa 50 sec. beträgt und das Verhältnis der ersten Zeitkonstante ($\tau$) zur Periodendauer ($t_e$) der Wiederholfrequenz etwa 30:1 bis etwa 5.000:1, bevorzugt etwa 50:1 bis etwa 1.000:1, beträgt.

8. Vorrichtung nach einem der Ansprüche 1 bis 7, **dadurch gekennzeichnet, daß** eine Taktrate der Erfassung der Komparator-Ausgangssignale durch die Auswerteinheit etwa 1 bis 50 KHz beträgt.

9. Vorrichtung nach einem der Ansprüche 1 bis 8, **dadurch gekennzeichnet, daß** die Auswerteinheit (16) zum Erfassen einer Anzahl von gleichen Komparator-Ausgangssignalen bis zu einem Signalzustandswechsel des Komparators (12) innerhalb eines vorbestimmten Zeitraumes, insbesondere der Periodendauer ($t_e$) der Wiederholfrequenz, ausgebildet ist.

10. Vorrichtung nach einem der Ansprüche 1 bis 9, **dadurch gekennzeichnet, daß** das Sensor-Spannungssignal von einem auf Bewegung reagierenden, im Infrarotbereich arbeitenden Detektorelement (10) erzeugt wird.

11. Vorrichtung zum Auswerten eines Sensor-Spannungssignals ($U_S$), das eine einer Gleichspannungskomponente ($U_{SDC}$) überlagerte, relativ zu dieser kleine Nutzsignalamplitude ($U_{SAC}$) aufweist, mit

einer zum Erfassen des Sensor-Spannungssignals und zum Erzeugen eines von der Nutzsignalamplitude abhängigen, Steuersignals eingerichteten Wandlerelektronik, **gekennzeichnet durch**

einen Spannungsgenerator, der zum gesteuerten Ausgeben eines Spannungssignals auf diskretem Pegel ausgebildet und mit einem eine erste Zeitkonstante aufweisenden Ladungsspeicher zum Erzeugen eines Sensor-Arbeitspunktsignals für den Sensor verbunden ist, wobei das Sensor-Spannungssignal um das Sensor-Arbeitspunktsignal angehoben werden kann und das Summensignal an einem digitalen, eine Schaltschwelle aufweisenden Detektoreingang einer Auswertelektronik anliegt,

und eine Steuereinheit, die zum Ansteuern des Spannungsgenerators dergestalt ausgebildet ist, daß dieser mit einer gegenüber der ersten Zeitkonstante kurzen Wiederholfrequenz als Reaktion auf ein Schaltschwellensignal zwischen zwei Spannungsstufen umschaltet,

wobei die Auswertelektronik zum Erfassen einer Mehrzahl von Schaltschwellensignalen so eingerichtet ist, daß als Reaktion auf eine Änderung der Schaltschwellensignale, insbesondere einer Kippfrequenz oder eines Tastverhältnisses derselben, das Steuersignal erzeugt wird.

12. Verfahren zum Auswerten eines Sensor-Spannungssignals ($U_S$), das eine einer Gleichspannungskomponente ($U_{SDC}$) überlagerte, relativ zu dieser kleine Nutzsignalamplitude ($U_{SAC}$) aufweist, mit den Schritten:

- Aufprägen eines stufenweise, mit einer ersten Periodendauer ($t_e$) wechselnden Spannungssignals ($U_G$) auf ein RC-Glied mit einer gegenüber der ersten Periodendauer ($t_e$) hohen Zeitkonstante ($\tau$),
- Vergleichen einer von einer aktuellen Ladespannung des RC-Gliedes abgeleiteten Spannung ($U_R$) mit dem Sensor-Spannungssignal ($U_S$) und Erzeugen einer Mehrzahl von periodischen Komparator-Signalen daraus, und
- Auswerten der Mehrzahl von Komparator-Signalen während eines vorbestimmten Zeitraumes und Erzeugen eines digitalen Steuersignals als Reaktion auf das Auswerten.

13. Verfahren nach Anspruch 12, **gekennzeichnet durch** den Schritt:

- Kalibrieren eines Ladungszustandes des RC-Gliedes auf den Pegel der Gleichspannungskomponente ($U_{SDC}$) **durch** das Anlegen einer höheren Spannung an das RC-Glied und das Unterbrechen dieser Spannungszufuhr als Reaktion auf ein Komparator-Signal, welches die Ladespannung mit der Gleichspannungskomponente vergleicht.

14. Verfahren nach Anspruch 13, **gekennzeichnet durch** das periodische Durchführen des Kalibrierungsschrittes nach Anspruch 13 während eines Auswertbetriebes nach Anspruch 12.

15. Verwendung der Vorrichtung nach einem der Ansprüche 1 bis 11 in einer einen Infrarot-Bewegungssensor zur Aktivierung aufweisenden Beleuchtungsvorrichtung.

**Claims**

1. Apparatus for evaluating a sensor voltage signal ($U_S$) exhibiting a wanted signal amplitude ($U_{SAC}$) which is superimposed on a d.c. voltage component ($U_{SDC}$) and is low relative to the latter, with an electronic transducer unit designed to detect the sensor voltage signal and to generate a digital control signal dependent on the wanted signal amplitude ($U_{SAC}$), **characterised by** a comparator (12) wired to compare the sensor voltage signal with a reference signal ($U_R$), a voltage generator (20) which is designed for the controlled output of a voltage signal ($U_C$) at a discrete level and connected to a charge-coupled device (22, 24) having a first time constant ($\tau$) for generating the reference signal ($U_R$), a control unit (28) which is designed to trigger the voltage generator (20) in such a way that the latter periodically switches between two voltage steps with a repetition frequency ($t_e$) which is short compared with the first time constant ($\tau$), and an evaluation unit (16) which is designed for cyclic detection of a plurality of comparator output signals and which generates the digital control signal as a reaction to the detected output signals, in particular the pulse-duty factor thereof.

2. Apparatus according to claim 1, **characterised in that** the comparator (12), the control unit (28) and the evaluation unit (16) are components of a commercially available microcontroller or microprocessor.

3. Apparatus according to claim 1 or 2, **characterised in that** the voltage generator (20) is a component of a commercially available microcontroller or microprocessor and is designed for programme-controlled output of the multi-step voltage signal.

4. Apparatus according to any of claims 1 to 3, **characterised in that** the charge-coupled device is constructed as an RC module composed of a charging capacitor and a charging resistor.

5. Apparatus according to any of claims 1 to 4, **characterised by** a decoupling unit (26) between the charge-coupled device and the comparator (12), which is preferably designed as a semiconductor element with a high input resistance.

6. Apparatus according to claim 5, **characterised in that** the decoupling unit is constructed with a Darlington transistor.

7. Apparatus according to any of claims 1 to 6, **characterised in that** the first time constant ($\tau$) is between about 5 and about 50 s and the ratio of the first time constant ($\tau$) to the period ($t_e$) of the repetition frequency is about 30:1 to about 5,000:1, preferably about 50:1 to about 1,000:1.

8. Apparatus according to any of claims 1 to 7, **characterised in that** a clock rate of detection of the comparator output signals by the evaluation unit is about 1 to 50 kHz.

9. Apparatus according to any of claims 1 to 8, **characterised in that** the evaluation unit (16) is designed for the detection of a number of equal comparator output signals until a change of signal state of the comparator (12) within a predetermined length of time, in particular the period ($t_e$) of the repetition frequency.

10. Apparatus according to any of claims 1 to 9, **characterised in that** the sensor voltage signal is generated by a detector element (10) reacting to movement and operating in the infrared range.

11. Apparatus for evaluating a sensor voltage signal ($U_S$) exhibiting a wanted signal amplitude ($U_{SAC}$) which is superimposed on a d.c. voltage component ($U_{SDC}$) and is low relative to the latter, with an electronic transducer unit designed to detect the sensor voltage signal and to generate a control signal dependent on the wanted signal amplitude, **characterised by** a voltage generator which is designed for the controlled output of a voltage signal at a discrete level and connected to a charge-coupled device having a first time constant for generating a sensor operating point signal for the sensor, wherein the sensor voltage signal can be raised by the sensor operating point signal and the sum signal is applied to a digital detector input of an electronic evaluation unit having a switching threshold, and a control unit which is designed to trigger the voltage generator in such a way that the latter switches between two voltage steps with a repetition frequency which is short compared with the first time constant as a reaction to a switching threshold signal, wherein the electronic evaluation unit is designed for detection of a plurality of switching threshold signals in such a way that the control signal is generated as a reaction to a change of the switching threshold signals, in particular a sweep frequency or a pulse-duty factor thereof.

12. Method for evaluating a sensor voltage signal ($U_S$) exhibiting a wanted signal amplitude ($U_{SAC}$) which is superimposed on a d.c. voltage component ($U_{SDC}$) and is low relative to the latter, with the steps of:

    - impressing a voltage signal ($U_C$) which alternates stepwise with a first period ($t_e$) to an RC module with a time constant ($\tau$) which is high compared with the first period ($t_e$),
    - comparing a voltage ($U_R$) derived from a current charging voltage of the RC module with the sensor voltage signal ($U_S$) and generating a plurality of periodic comparator signals therefrom, and
    - evaluating the plurality of comparator signals during a predetermined length of time and generating a digital control signal as a reaction to evaluation.

13. Method according to claim 12, **characterised by** the step of:

    - calibrating a state of charge of the RC module to the level of the d.c. voltage component ($U_{SDC}$) by applying a higher voltage to the RC module and interrupting this voltage supply as a reaction to a comparator signal which compares the charging voltage with the d.c. voltage component.

14. Method according to claim 13, **characterised by** periodically carrying out the calibrating step according to claim 13 during an evaluation mode according to claim 12.

15. Use of the apparatus according to any of claims 1 to 11 in a lighting apparatus comprising an infrared movement sensor for activation.

**Revendications**

1. Dispositif d'évaluation d'un signal de tension de capteur ($U_S$), présentant une amplitude de signal utile ($U_{SAC}$), superposée à une composante de tension continue ($U_{SDC}$), ayant une faible valeur par rapport à celle-ci, avec une électronique de conversion agencée pour détecter le signal de tension de capteur et pour générer un signal de commande numérique dépendant de l'amplitude de signal utile ($U_{SAC}$), **caractérisé par**

un comparateur (12) branché pour effectuer la comparaison du signal de tension de capteur à une tension de référence ($U_R$),

un générateur de tension (20), réalisé pour envoyer de façon commandée un signal de tension ($U_G$) à un niveau discret et relié à un accumulateur de charge (22, 24), présentant une première constante de temps ($\tau$) pour générer le signal de référence ($U_R$),

une unité de commande (28) réalisée pour commander le générateur de tension (20), de manière que celui-ci commute périodiquement entre deux niveaux de tension, à une fréquence de répétition ($t_e$) courte par rapport à la première constante de temps ($\tau$),

et une unité d'évaluation (16) agencée pour la détection cadencée d'une pluralité de signaux de sortie de comparateur, unité générant en réaction aux signaux de sortie détectés, en particulier à leur rapport de durée d'impulsion, le signal de commande numérique.

2. Dispositif selon revendication 1, **caractérisé en ce que** le comparateur (12), l'unité de commande (28) et l'unité d'évaluation (16) font partie d'un microcontrôleur ou d'un microprocesseur du commerce.

3. Dispositif selon revendication I ou 2, **caractérisé en ce que** le générateur de tension (20) fait partie d'un microcontrôleur ou d'un microprocesseur du commerce et **en ce qu'**il est réalisé pour la sortie, sous la commande d'un programme, du signal de tension à plusieurs niveaux.

4. Dispositif selon l'une des revendications 1 à 3, **caractérisé en ce que** l'accumulateur de charge est réalisé sous la forme d'un organe à résistance-capacité (RC), formé d'un condensateur de charge et d'une résistance de charge.

5. Dispositif selon l'une des revendications 1 à 4, **caractérisé par** une unité de découplage (26) entre l'accumulateur de charge et le comparateur (12) qui, de préférence, est réalisée sous la forme d'éléments à semi-conducteurs ayant une haute résistance d'entrée.

6. Dispositif selon revendication 5, **caractérisé en ce que** l'unité de découplage est réalisée avec un transistor en montage Darlington.

7. Dispositif selon l'une des revendications 1 à 6, **caractérisé en ce que** la première constante de temps ($\tau$) est entre environ 5 et environ 50 secondes et le rapport entre la première constante de temps ($\tau$) et la durée de périodicité ($t_e$) de la fréquence de répétition est d'environ 30:1 à environ 5000:1, de préférence d'environ 50:1 jusqu'à environ 1000:1.

8. Dispositif selon l'une des revendications 1 à 7, **caractérisé en ce qu'**une cadence de détection des signaux de sortie du comparateur par l'unité d'évaluation est d'environ 1 à 50 KHz.

9. Dispositif selon l'une des revendications 1 à 8, **caractérisé en ce que** l'unité d'évaluation (16) est réalisée pour détecter une pluralité de signaux de sortie de comparateur identiques jusqu'à un changement d'état de signal du comparateur (12) dans les limites d'un intervalle de temps prédéterminé, en particulier de la durée de périodicité ($t_e$) de la fréquence de répétition.

10. Dispositif selon l'une des revendications 1 à 9, **caractérisé en ce que** le signal de tension de capteur est généré par un élément détecteur (10) réagissant aux déplacements, travaillant dans la plage des infrarouges.

11. Dispositif pour évaluer un signal de tension de capteur ($U_S$) présentant une amplitude de signal utile ($U_{SAC}$), superposée à une composante de tension continue ($U_{SDC}$), petite par rapport à celle-ci, avec

une électronique de conversion agencée pour détecter le signal de tension de capteur et pour générer un signal de commande numérique dépendant de l'amplitude du signal utile, **caractérisé par**

un générateur de tension, réalisé pour l'envoi sous l'effet d'une commande d'un signal de tension à un niveau discret et avec un accumulateur de charge présentant une première constante de temps pour générer un signal de point de travail de capteur pour le capteur, le signal de tension de capteur pouvant être augmenté de la valeur du signal de point de travail de capteur et le signal de somme étant appliqué à une entrée de détecteur, présentant un seuil de commutation, d'une électronique d'évaluation,

et une unité de commande réalisée pour commander le générateur de tension, de manière que celui-ci commute, avec une fréquence de répétition courte par rapport à la première constante de temps, entre deux niveaux de tension en réaction à un signal de seuil de commutation,

l'électronique d'évaluation devant détecter une pluralité de signaux de seuil de commutation étant agencée de manière qu'en réaction à une variation des signaux de seuil de commutation, en particulier à une fréquence de basculement ou un rapport de durée d'impulsion de celui-ci, le signal de commande soit généré.

12. Procédé d'évaluation d'un signal de tension de capteur (Us), présentant une amplitude de signal utile ($U_{SAC}$), superposée à une composante de tension continue ($U_{SDC}$), petite par rapport à celle-ci, présentant les étapes consistant à:

   - appliquer un signal de tension ($U_G$) alternatif à degrés ayant une première durée de périodicité ($t_e$) à un organe RC ayant une constante de temps ($\tau$) élevé par rapport à la première durée de périodicité ($t_e$),
   - comparer une tension ($U_R$) dérivée d'une tension de charge actuelle de l'organe RC au signal de tension de capteur ($U_S$) et générer à partir de cela une pluralité de signaux de comparateur périodiques,
   - évaluer la pluralité des signaux de comparateur pendant un intervalle de temps prédéterminé et générer un signal de commande numérique en réaction à l'évaluation.

13. Procédé selon la revendication 12, **caractérisé par** l'étape consistant à:

   - étalonner un état de charge de l'organe RC au niveau de la composante de tension continue ($U_{SDC}$) par application d'une tension plus élevée à l'organe RC et interrompre cette fourniture de tension en réaction à un signal de comparateur, comparant la tension de charge à la composante de tension continue.

14. Procédé selon la revendication 13, **caractérisé par** l'exécution périodique de l'étape d'étalonnage, selon la revendication 13, pendant un fonctionnement en évaluation selon la revendication 12.

15. Utilisation du dispositif selon l'une des revendications 1 à 11, dans un dispositif d'illumination présentant un capteur de déplacement à infrarouges, servant à l'activation.

Fig.1

Fig.2

Fig.3